# FASCICULE DE BREVET EUROPEEN

(11) **EP 0 707 674 B1**
(45) Date de publication et mention de la délivrance du brevet: **11.11.1998**
(21) Numéro de dépôt: 94922890.2
(22) Date de dépôt: 08.07.1994
(51) Int. Cl.: D21H 27/40, B31F 1/07

(54) **PAPIERS GAUFRES MULTICOUCHES, DISPOSITIF ET PROCEDE POUR LEUR ELABORATION**
GEPRÄGTE MEHRLAGIGE PAPIERE, VORRICHTUNG UND VERFAHREN ZU IHRER HERSTELLUNG
MULTILAYER EMBOSSED PAPERS, AND DEVICE AND METHOD FOR PRODUCING SAME

(30) Priorité: 09.07.1993 FR 9308509
(43) Date de publication de la demande: 24.04.1996
(73) Titulaire: FORT JAMES FRANCE, 68320 Kunheim (FR)
(72) Inventeur: LAURENT, Pierre, F-68000 Colmar (FR)
(74) Mandataire: David, Daniel
(86) Numéro de dépôt international: FR9400852
(87) Numéro de publication internationale: WO9502089

(56) Documents cités:
- EP-A- 0 264 676
- EP-A- 0 564 319
- NL-A- 8 400 146

## Description

La présente invention a pour objet de nouveaux papiers multicouches, un dispositif et un procédé pour les fabriquer.

L'invention concerne plus particulièrement les papiers utilisables dans le domaine ménager et domestique, en particulier les papiers gaufrés à base de papier crêpé de type ouate de cellulose encore appelé papier tissue. Dans ce domaine, on recherche tout particulièrement des papiers ayant de bonnes qualités d'absorption associées à une grande douceur et de bonnes propriétés de résistance mécanique.

On s'est orienté dans ce domaine, depuis de nombreuses années, vers des papiers présentant plusieurs couches, en général deux ou trois, préalablement gaufrées, puis collées légèrement entre elles, de la colle étant disposée sur les extrémités des protubérances réalisées au cours de l'opération de gaufrage.

Deux système différents de gaufrage, d'assemblage et collage sont actuellement utilisés conduisant à deux types de structure différents. Un premier type consiste à réaliser deux gaufrages identiques sur deux plis séparés de papier de façon à réaliser des protubérances sur les feuilles, à former un stratifié à partir de ces deux feuilles, les protubérances des deux feuilles étant dirigées vers la partie interne du stratifié et collées entre elles par leurs extrémités. Ce système réalise ce que l'on conviendra d'appeler un assemblage "pointe/pointe". Un tel procédé, ainsi que les laminés obtenus, est décrit dans le brevet US-A-3414459. Un tel système permet essentiellement de faire des papiers à deux couches avec la structure représentée à la figure 6 du brevet US-A-3414459. Une autre variante décrite dans ce brevet consiste, comme cela apparaît à la figure 7, à insérer avant le collage des pointes une feuille non gaufrée entre les deux feuilles gaufrées.

Un autre procédé décrit en particulier dans le brevet US-A-3867225 consiste à réaliser également un stratifié entre deux feuilles gaufrées placées également de façon que les protubérances soient dirigées vers l'intérieur du stratifié, à encoller les extrémités des protubérances d'une des deux feuilles et à réaliser le collage dans une position telle que les protubérances d'une feuille viennent s'emboîter entre deux protubérances de l'autre feuille. On conviendra d'appeler structure "emboîtée" ou "nested" la structure obtenue.

D'une façon générale, pour les applications ménagères, on recherche des assemblages de feuilles de papier gaufrées alliant essentiellement des qualités de douceur, un toucher agréable, de bonnes propriétés d'absorption avec une bonne résistance mécanique.

La demanderesse a poursuivi des travaux dans ce sens et a maintenant trouvé une nouvelle structure composée d'au moins trois feuilles de papier gaufrées et présentant à la fois des qualités de douceur améliorées du fait qu'une plus grande quantité d'air se trouve enfermée entre les couches de papier en même temps qu'une résistance mécanique accrue.

La présente invention propose donc une nouvelle structure de papier gaufré multicouche associant des qualités jusque là jamais réunies. Elle propose également un procédé et un dispositif pour réaliser ces papiers multicouches.

Selon une de ces caractéristiques essentielles l'invention concerne un papier multicouche composé d'au moins trois feuilles de papier gaufrées présentant des protubérances régulièrement réparties et comprenant deux feuilles, dites feuilles externes dont les protubérances respectives sont placées en position pointe/pointe et une troisième feuille gaufrée dite feuille intermédiaire dont les protubérances s'intercalent en position "emboîtée" entre deux protubérances consécutives de l'une des deux feuilles externes.

Une telle structure a l'avantage de présenter simultanément les avantages des deux structures "pointe/pointe" et "emboîtées" décrites précédemment sans présenter les inconvénients que chacune d'elles peut avoir en particulier on améliore par cette structure la résistance mécanique d'une simple structure pointe/pointe et la douceur d'une simple structure "nested".

Ainsi les papiers multicouches de l'invention présentent à la fois une bonne stabilité de structure, une bonne résistance à l'écrasement ce qui les apparente aux produits de type "emboîtées" et une épaisseur accrue ce qui améliore les qualités de toucher et de douceur.

Dans les papiers multicouches selon l'invention les deux feuilles externes présentent généralement des gaufrages identiques c'est-à-dire de même pas et de même amplitude.

Ces deux feuilles sont placées de façon symétrique de façon à ce que l'extrémité de leurs protubérances viennent en regard les unes des autres.

Les protubérances de la feuille intermédiaire viennent s'intercaler entre les protubérances des feuilles externes et sont avantageusement d'une hauteur au plus égale à la hauteur des protubérances de la feuille externe entre lesquelles elles s'intercalent en position "emboîtée". Ceci a l'avantage de ne créer à l'extérieur de la feuille complexe de papier aucune aspérité qui risquerait de nuire à la douceur du toucher de ce papier.

Cependant, la hauteur des protubérances de la feuille intermédiaire est avantageusement au moins égale à 50 % de la hauteur des protubérances de la feuille externe entre lesquelles elles s'intercalent. Une telle proportion permet d'obtenir de bonnes propriétés mécaniques.

Comme c'est le cas dans les papiers multicouches constitués de plusieurs feuilles de papier gaufrées, la cohésion entre les différentes feuilles de papier gaufrées est avantageusement assurée par collage.

Ce collage est réalisé au niveau des extrémités des protubérances des feuilles externes placées l'une par rapport à l'autre en position pointe/pointe.

Chacune des pointes d'une des feuilles externes vient ainsi se coller sur la feuille intermédiaire entre deux protubérances consécutives de ladite feuille intermédiaire et en vis-à-vis d'une protubérance symétrique de l'autre feuille externe.

Selon une variante de l'invention, de façon à améliorer encore, si nécessaire, la résistance de l'ensemble du papier multicouche, on peut prévoir de remplacer l'une au moins des deux feuilles externes par une double couche de papier gaufrée selon le même principe.

Les feuilles externes du papier multicouche, selon l'invention, sont constituées avantageusement de papier crêpé de type ouate de cellulose encore appelée papier tissue. Ce papier tissue présente avantageusement un grammage compris entre 10 et 30 g/m².

La feuille intermédiaire est également constituée avantageusement d'une feuille de papier tissue présentant un grammage compris entre 10 et 30 g/m².

Comme c'est classique dans le domaine des papier à usage ménager, on fait appel généralement à des papiers tissues ayant subi un traitement pour améliorer leur résistance à l'humidité.

De tels papiers tissues peuvent être utilisés pour la réalisation des trois feuilles constituant le papier multicouche de l'invention.

Toutefois, selon un variante avantageuse de l'invention, la feuille intermédiaire est réalisée avec un papier qui n'a pas subi un tel traitement pour améliorer leur résistance à l'humidité.

L'utilisation d'une telle qualité de papier pour réaliser la feuille intermédiaire permet de n'encoller les extrémités des protubérances que d'une seule des deux feuilles externes, puisque le papier intermédiaire présente alors une bonne perméabilité à la colle.

On pourra également utiliser, avec le même avantage, pour la réalisation de la feuille intermédiaire, toute feuille de papier présentant une bonne perméabilité à la colle.

Selon une autre de ces caractéristiques, l'invention concerne un procédé de fabrication des papiers multicouches décrits précédemment.

Un tel procédé consiste à :
- gaufrer un premier pli de papier en réalisant des protubérances sur une face dudit pli,
- gaufrer séparément un deuxième pli en réalisant sur ce pli des protubérances avec un même pas que le gaufrage du premier pli,
- gaufrer séparément un troisième pli avec un gaufrage également de même pas,
- rassembler les trois plis gaufrés précédemment de façon que les deux premiers plis soient placés en position pointes/pointes et que le troisième pli vienne s'intercaler entre les deux premiers plis en étant emboîté par rapport à l'un d'entre eux.

Pour améliorer la cohésion entre les différentes feuilles de papier constituant le papier multicouche de l'invention, on effectue avantageusement un collage entre les différentes feuilles. Ce collage est réalisé au niveau des protubérances des feuilles externes et, pour cela, on dépose de la colle sur l'extrémité des protubérances d'au moins une des deux feuilles externes ; en général, on dépose de la colle sur les extrémités de l'ensemble des protubérances des deux feuilles externes et on assure ainsi un collage de chacune de ces feuilles à la feuille intermédiaire.

Toutefois, dans la mesure où la feuille intermédiaire est suffisamment perméable à la colle, on pourra se contenter de réaliser l'opération d'encollage uniquement sur l'extrémité des protubérances de l'une des deux feuilles externes.

Selon une autre de ces caractéristiques, l'invention concerne une installation permettant la réalisation des papiers multicouches décrits précédemment.

Une telle installation comprend trois groupes de gaufrage dont deux au moins sont mobiles, chacun de ces groupes comprenant deux cylindres dont l'un est en matériau indéformable gravé et l'autre en matériau élastique, les trois cylindres gravés présentant des gravures de même espacement.

L'installation comprend également, le cas échéant, au moins un groupe d'encollage.

D'autres buts et caractéristiques de l'invention apparaîtront dans la description qui va suivre, faite en référence aux dessins :
- la figure 1 représente schématiquement la structure d'une feuille de papier multicouche selon l'invention ;
- la figure 2 représente schématiquement un dispositif permettant de réaliser un papier multicouche selon l'invention ;

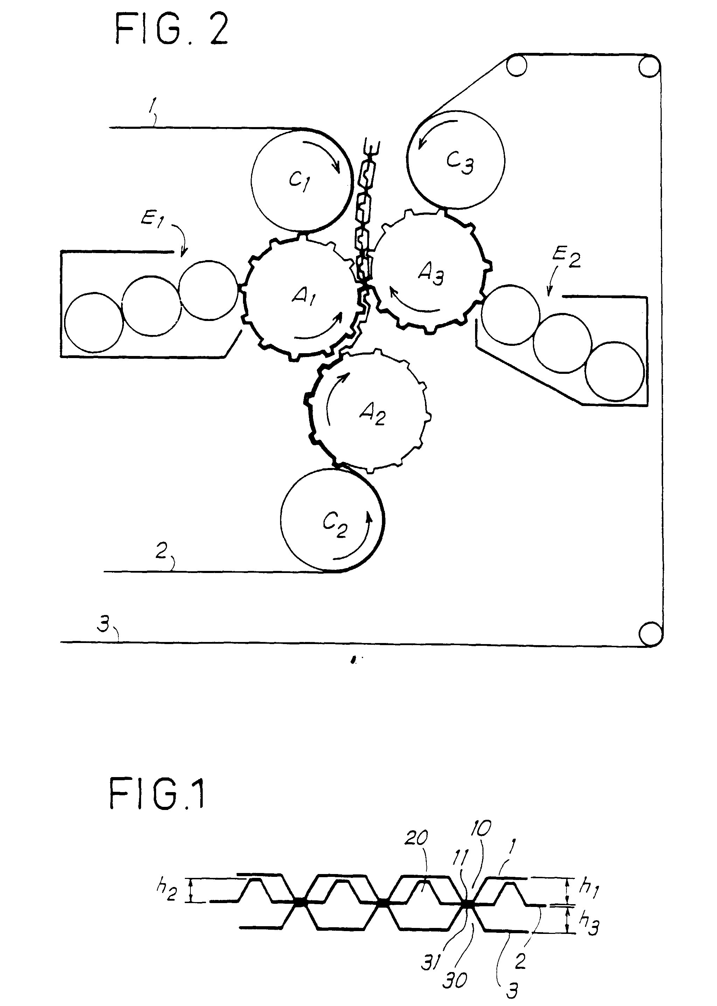

La figure 1 représente la structure d'une feuille de papier multicouche selon l'invention. Cette feuille est constituée de trois feuilles 1, 2, 3. Les feuilles 1 et 3 constituent les feuilles externes du papier selon l'invention ; elles présentent des gaufrages symétriques et sont disposées de façon que leurs protubérances respectives 10, 30 soient disposées en position pointes/pointes. Sur la structure représentée sur la figure 1, la hauteur h1 des protubérances de la feuille 1 est identique à la hauteur h3 des protubérances de la feuille externe 3.

La feuille intermédiaire 2 est assemblée aux feuilles externes 1 et 3 de façon que les protubérances 20 viennent s'intercaler entre deux protubérances consécutives des feuilles 1 et 3, en position "emboîtées".

La hauteur h2 des protubérances de la feuille 2 est dans le cas représenté sur la figure 1 légèrement inférieure à la hauteur des protubérances h1 de la feuille 1. Ceci offre l'avantage de ne former extérieurement aucune aspérité sur la surface du papier tout en ayant d'excellentes propriétés de résistance mécaniques.

Le collage est réalisé au niveau des extrémités 11 des protubérances 10 de la feuille 1 et des extrémités 31 des protubérances 30 de la feuille 3, les extrémités de ces protubérances venant se coller entre les deux protubérances 20 consécutives de la feuille 2.

La figure 2 représente une installation permettant de préparer un papier multicouche constitué de trois couches de papier gaufré.

Cette installation est constituée de trois groupes de gaufrage, respectivement (A1, C1), (A2, C2) et (A3, C3) constitué chacun d'un cylindre (A1, A2, A3) en matériau indéformable gravé, par exemple en acier, d'un cylindre (C1, C2, C3) en matériau élastique, par exemple en caoutchouc. Sur l'installation représentée à la figure 2, on a également représenté deux groupes d'encollage (E1 et E2) permettant d'encoller les extrémités des protubérances qui seront réalisées par gaufrage des feuilles 1 et 3 respectivement sur les cylindres gravés A1 et A3.

Comme on l'a vu précédemment, suivant la nature de la feuille intermédiaire, on pourra se contenter d'un seul groupe d'encollage (E1 ou E2), si cette feuille intermédiaire est suffisamment perméable à la colle.

Le groupe de gaufrage (A1, C1) est fixe, les deux autres groupes de gaufrage sont mobiles et sont disposés de façon que les extrémités des protubérances du cylindre A3 viennent en cours de fonctionnement en coïncidence avec celles du cylindre A1 alors que les extrémités des protubérances réalisées sur le cylindre A2 viennent s'intercaler entre les extrémités des protubérances de la gravure réalisée sur le cylindre A1.

En cours de fonctionnement, les différents cylindres tournent dans le sens indiqué par les flèches figurant sur ces cylindres à la figure 2.

Le pli 1 provenant d'un dévidoir non représenté est gaufré en passant entre les cylindres A1 et C1 du premier groupe de gaufrage.

Le pli 2, en provenance d'un dévidoir non représenté, est gaufré en passant entre les cylindres A2 et C2 du deuxième groupe de gaufrage. Le pli 3 est également gaufré en passant entre les cylindres A3 et C3 constituant le troisième groupe de gaufrages.

La position respective des cylindres A1, A2 et A3 décrite précédemment est telle que les plis 1 et 3 se trouvent associés en position pointes/pointes alors que le pli 2 vient s'intercaler et s'emboîter entre les deux autres plis.

Les deux groupes d'encollage (E1 et E2) permettent d'encoller les extrémités des protubérances réalisées respectivement sur les plis 1 et 3 et d'assurer le collage de ces deux plis lorsqu'ils passent entre les protubérances, venues en coïncidence, des cylindres (A1 et A3).

## Revendications

1. Papier multicouche composé d'au moins trois feuilles de papier gaufrées (1, 2, 3) présentant des protubérances régulièrement réparties, caractérisé en ce qu'il comprend deux feuilles (1, 3), dites feuilles externes dont les protubérances respectives (10, 30) sont placées en position pointes/pointes et une troisième feuille (2) gaufrée dite feuille intermédiaire dont les protubérances (20) s'intercalent en étant emboîtées entre deux protubérances consécutives des deux feuilles externes (1 et 3).

2. Papier selon la revendication 1, caractérisé en ce que les deux feuilles externes (1, 3) représentent des gaufrages identiques, de même pas et de même amplitude (h₁ et h₃).

3. Papier selon la revendication 1 ou 2, caractérisé en ce que la hauteur (h₂ des protubérances constituant le gaufrage de la feuille intermédiaire (2) est au plus égal à la hauteur (h₁, h₃) des protubérances (10, 30) de la feuille externe (1, 3) entre lesquelles elles s'intercalent.

4. Papier selon la revendication 3, caractérisé en ce que la hauteur (h₂) des protubérances (20) de la feuille intermédiaire (2) est au moins égale à 50 % de celle des protubérances de la feuille externe (1 ou 3) entre lesquelles elles s'intercalent.

5. Papier selon l'une des revendications 1 à 4, caractérisé en ce qu'il présente des points de collage au niveau des extrémités (11, 31) des protubérances des feuilles externes (1, 3) placées en position pointe/pointe.

6. Papier selon l'une des revendications 1 à 5, caractérisé en ce que l'une au moins des feuilles externes (1, 3) est constituée d'une double épaisseur de papier.

7. Papier selon l'une des revendications 1 à 6, caractérisé en ce que chacune des feuilles externes est constituée d'ouate de cellulose dont le grammage est compris entre 10 et 30 g/m².

8. Papier selon l'une des revendications 1 à 7, caractérisé en ce que la feuille intermédiaire (2) est constituée d'une feuille d'ouate de cellulose de grammage compris entre 10 et 30 g/m².

9. Papier selon l'une des revendications 1 à 8, caractérisé en ce que les feuilles externes (1, 3) ainsi que la feuille intermédiaire (2) sont constituées d'ouate de cellulose ayant subi un traitement pour améliorer sa résistance à l'humidité.

10. Papier selon l'une des revendications 1 à 8, caractérisé en ce que la feuille intermédiaire (2) est constituée d'ouate de cellulose n'ayant pas subi de traitement pour améliorer sa résistance à l'humidité.

11. Procédé de fabrication d'un papier multicouche selon l'une des revendications 1 à 10, caractérisé en ce qu'il consiste à
- gaufrer un premier pli (1) en réalisant des protubérances (10) sur une des faces dudit pli,
- gaufrer séparément un deuxième pli (3) en réalisant sur une des faces de ce pli, des protubérances (30) avec un même pas que le gaufrage du premier pli (1),
- gaufrer séparément un troisième pli (2) avec un gaufrage également de même pas,
- rassembler les trois plis (1, 2, 3) de façon que les deux premiers plis (1, 3) soient placés en position pointes/pointes et que le troisième pli (2) s'intercale entre les deux premiers plis (1, 3) de façon à ce que les protubérances (20) du pli intermédiaire s'intercalent en étant emboîtées par rapport aux protubérances (10, 30) des deux plis externes (1 et 3).

12. Procédé selon la revendication 11, caractérisé en ce que l'on encolle les extrémités (11, 31) des protubérances (10, 30) d'au moins un des deux premiers plis (1, 3) avant de rassembler les trois plis (1, 2, 3).

13. Installation permettant la réalisation d'un papier multicouche selon l'une des revendications 1 à 10 ou la mise en oeuvre du procédé selon l'une des revendications 11 ou 12, caractérisée en ce qu'elle comprend trois groupes de gaufrage (A1, C1), (A2, C2), (A3, C3) dont deux au moins sont mobiles, constitués chacun de deux cylindres dont l'un (A1, A2, A3) est en un matériaux indéformable gravé, et d'un cylindre (Cl, C2, C3) en matériau élastique, les trois cylindres gravés présentant des gravures de même espacement.

14. Installation selon la revendication 13, caractérisé en ce qu'elle comprend en outre au moins un groupe d'encollage (E1, E2).

## Claims

1. Multilayer paper composed of at least three sheets of embossed paper (1, 2, 3) having regularly distributed protuberances, characterized in that it comprises two sheets (1, 3), so-called outer sheets, of which the respective protuberances (10, 30) are placed in a point-to-point position and a third embossed sheet (2), a so-called intermediate sheet, of which the protuberances (20) are interposed so as to nest between two consecutive protuberances of the two outer sheets (1 and 3).

2. Paper according to claim 1, characterized in that the two outer sheets (1, 3) represent identical embossings, with the same pitch and the same amplitude (h₁ and h₃).

3. Paper according to claim 1 or 2, characterized in that the height (h₂) of the protuberances constituting the embossing of the intermediate sheet (2) is at most equal to the height (h₁, h₂) of the protuberances (10, 30) of the outer sheet (1, 3) between which they are interposed.

4. Paper according to claim 3, characterized in that the height (h₂) of the protuberances (20) of the intermediate sheet (2) is at least equal to 50 % of that of the protuberances of the outer sheet (1 or 3) between which they are interposed.

5. Paper according to one of claims 1 to 4, characterized in that it has gluing points at the level of the ends (11, 31) of the protuberances of the outer sheets (1, 3) placed in a point-to-point position.

6. Paper according to one of claims 1 to 5, characterized in that at least one of the outer sheets (1, 3) consists of a double thickness of paper .

7. Paper according to one of claims 1 to 6, characterized in that each of the outer sheets consists of a sheet of cellulose wadding of which the grammage is between 10 and 30 g/m².

8. Paper according to one of claims 1 to 7, characterized in that the intermediate sheet (2) consists of a sheet of cellulose wadding of which the grammage is between 10 and 30 g/m².

9. Paper according to one of claims 1 to 8, characterized in that the outer sheets (1, 3) as well as the intermediate sheet (2) consist of cellulose wadding having been subjected to a treatment to improve its wet strength.

10. Paper according to one of claims 1 to 8, characterized in that the intermediate sheet (2) consists of cellulose wadding which has not been subjected to a treatment to improve its wet strength.

11. Process for manufacturing a multilayer paper according to one of claims 1 to 10, characterized in that it consists of
- embossing a first ply (1) by producing protuberances (10) on one of the surfaces of the said ply,
- embossing separately a second ply (3) by producing on one of the surfaces of this ply protuberances (30) with the same pitch as the embossing of the first ply (1),
- embossing separately a third ply (2) with an embossing also with the same pitch,
- bringing the three plies (1, 2, 3) together in such a way that the first two plies (1, 3) are placed in a point-to-point position and the third ply (2) is interposed between the first two plies (1, 3) in such a way that the protuberances (20) of the intermediate ply are interposed so as to nest between the protuberances (10, 30) of the two outer plies (1 and 3).

12. Process according to claim 11, characterized in that the ends (11, 31) of the protuberances (10, 30) of at least one of the two outer plies (1, 3) are glued before bringing the three plies (1, 2, 3) together.

13. Installation enabling a multilayer paper according to one of claims 1 to 10 to be produced or the process according to either of claims 11 or 12 to be implemented, characterized in that it comprises three embossing units (A1, C1), (A2, C2), (A3, C3) of which at least two are movable, each consisting of two cylinders of which one (A1, A2, A3) is made of an engraved rigid material, and a cylinder (C1, C2, C3) made of an elastic material, the three engraved cylinders having engravings with the same spacing.

14. Installation according to claim 13, characterized in that it additionally includes at least one gluing unit (E1, E2).

## Patentansprüche

1. Mehrlagiges Papier zusammengesetzt aus zumindest drei Blättern geprägten Papiers (1, 2, 3), die gleichmäßig verteilte Vorsprünge aufweisen, dadurch gekennzeichnet, daß es zwei Blätter (1, 3) aufweist, die äußere Blätter genannt werden, deren jeweilige Vorsprünge (10, 30) in einer Stellung Spitze/Spitze angeordnet sind, und ein drittes geprägtes Blatt (2) das Zwischenblatt genannt wird, dessen Vorsprünge (20) sich einfügen, indem sie zwischen zwei der aufeinanderfolgenden Vorsprünge der beiden äußeren Blätter (1 und 3) eingeschachtelt sind.

2. Papier gemäß Anspruch 1, dadurch gekennzeichnet, daß die beiden äußeren Blätter (1, 3) identische Prägungen aufweisen, mit demselben Abstand und derselben Größe (h₁ und h₃).

3. Papier gemäß Anspruch 1 oder 2, dadurch gekennzeichnet, daß die Höhe (h₂) der die Prägung bildenden Vorsprünge des Zwischenblattes (2) höchstens gleich der Höhe (h₁, h₃) der Vorsprünge (10, 30) des äußeren Blattes (1, 3) ist, zwischen denen sie sich einfügen.

4. Papier gemäß Anspruch 3, dadurch gekennzeichnet, daß die Höhe (h₂) der Vorsprünge (20) des Zwischenblattes (2) zumindest gleich 50 % von derjenigen der Vorsprünge des äußeren Blattes (1 oder 3) ist, zwischen denen sie sich einfügen.

5. Papier gemäß einem der Ansprüche 1 bis 4, dadurch gekennzeichnet, daß es Klebepunkte auf dem Niveau der Enden (11, 31) der Vorsprünge der äußeren Blätter (1, 3) aufweist, die in einer Stellung Spitze/Spitze angeordnet sind

6. Papier gemäß einem der Ansprüche 1 bis 5, dadurch gekennzeichnet, daß zumindest eines der äußeren Blätter (1, 3) aus einer doppelten Dicke Papier besteht.

7. Papier gemäß einem der Ansprüche 1 bis 6, dadurch gekennzeichnet, daß jedes der äußeren Blätter aus Cellulosewatte gebildet ist, wovon das Flächengewicht zwischen 10 und 30 g/m² beträgt.

8. Papier gemäß einem der Ansprüche 1 bis 7, dadurch gekennzeichnet, daß das Zwischenblatt (2) von einem Blatt Cellulosewatte gebildet ist mit einem Flächengewicht, daß zwischen 10 und 30 g/m² beträgt.

9. Papier gemäß einem der Ansprüche 1 bis 8, dadurch gekennzeichnet, daß die äußeren Blätter (1, 3) sowie das Zwischenblatt (2) aus Cellulosewatte gebildet sind, die einer Behandlung unterworfen worden ist, um ihr Feuchtigkeitsverhalten zu verbessern.

10. Papier gemäß einem der Ansprüche 1 bis 8, dadurch gekennzeichnet, daß das Zwischenblatt (2) aus Cellulosewatte gebildet ist, die nicht einer Behandlung unterworfen worden ist, um ihr Feuchtigkeitsverhalten zu verbessern.

11. Verfahren zur Herstellung eines mehrschichtigen Papiers gemäß einem der Ansprüche 1 bis 10, dadurch gekennzeichnet, daß es besteht aus
- dem Prägen einer ersten Lage (1) unter Verwirklichung von Vorsprüngen (10) auf einer der Seiten der Lage,
- dem getrennten Prägen einer zweiten Lage (3) unter Verwirklichung von Vorsprüngen (30) auf einer der Seiten dieser Lage mit demselben Abstand wie die Prägungen der ersten Lage (1),
- dem getrennten Prägen einer dritten Lage (2) mit einer ebenfalls denselben Abstand aufweisenden Prägung,
- dem Zusammenbringen der drei Lagen (1, 2, 3), so daß die beiden ersten Lagen (1, 3) in einer Stellung Spitze/Spitze angeordnet sind und die dritte Lage (2) sich zwischen die beiden ersten Lagen (1, 3) einfügt, so daß die Vorsprünge (20) der Zwischenlage eingefügt sind, wobei sie zwischen den Vorsprüngen (10, 30) der beiden ersten Lagen (1 und 3) eingeschachtelt sind.

12. Verfahren gemäß Anspruch 11, dadurch gekennzeichnet, daß man die Enden (11, 31) der Vorsprünge (10, 10) von zumindest einer der beiden Lagen (1, 3) mit Klebstoff versieht, bevor man die drei Lagen (1, 2, 3) zusammensetzt.

13. Vorrichtung, die die Herstellung eines mehrschichtigen Papiers gemäß einem der Ansprüche 1 bis 10 oder die Durchführung des Verfahrens gemäß einem der Ansprüche 11 oder 12 ermöglicht, dadurch gekennzeichnet, daß sie drei Prägegruppen (A1, C1), (A2, C2), (A3, C3) umfaßt, wovon zumindest zwei mobil sind, die jeweils von zwei Zylindern gebildet sind, von denen einer (A1, A2, A3) aus einem gravierten, nicht verformbaren Material und ein Zylinder (C1, C2, C3) aus einem elastischen Material ist, wobei die drei gravierten Zylinder Gravuren mit demselben Abstand aufweisen.

14. Vorrichtung gemäß Anspruch 13, dadurch gekennzeichnet, daß sie überdies zumindest eine Klebegruppe (E1, E2) umfaßt.
